# EUROPÄISCHE PATENTSCHRIFT

(11) **EP 0 744 276 B1**
(45) Veröffentlichungstag und Bekanntmachung des Hinweises auf die Patenterteilung: **17.11.1999**
(21) Anmeldenummer: 95113948.4
(22) Anmeldetag: 06.09.1995
(51) Int. Cl.: B29D 11/00, B29C 39/00, B29C 33/00, B29C 39/02

(54) **Verfahren zur Herstellung eines integriert optischen Deckelbauteils, integriert optisches Deckelbauteil, Verfahren zur Herstellung eines integriert optischen Bauteils mit einem integriert optischen Deckelbauteil und integriert optisches Bauteil mit einem integriert optischen Deckelbauteil**
Process for the production of an integrated optical cover, integrated optical cover, process for the production of an integrated optical part with an integrated optical cover and integrated optical part with an integrated optical cover
Procédé pour la fabrication d'un couvercle en optique intégré, couvercle en optique intégré, procédé pour la fabrication d'un élément en optique intégré avec un couvercle en optique intégré et élément en optique intégré avec un couvercle en optique intégré

(30) Priorität: 29.09.1994 DE 4434832
(43) Veröffentlichungstag der Anmeldung: 27.11.1996
(73) Patentinhaber: Harting Elektro-optische Bauteile GmbH & Co. KG., 31162 Bad Salzdetfurth (DE)
(72) Erfinder: Schunk, Nikolaus, Dr., D-64372 Ober-Ramstadt (DE); Kragl, Hans, Dr., D-64372 Ober-Ramstadt (DE)
(74) Vertreter: Bunke, Holger, Dr.rer.nat. Dipl.-Chem.

(56) Entgegenhaltungen:
- WO-A-94/08236
- US-A- 2 701 894
- US-A- 3 272 904
- US-A- 3 838 316
- US-A- 4 335 932
- NTT REVIEW, Bd. 5, Nr. 4, Juli 1993, TOKYO, Seiten 82-89, XP000385448 STATKE,BLUBAUGH,MIDKIFF,ARIKAWA: "us conec spreads mt connector into north american markets"

## Beschreibung

### Stand der Technik

Die Erfindung geht aus von eine Verfahren zur Herstellung eines integriert optischen Deckelbauteils nach dem Oberbegriff des Anspruchs 1, eine integriert optischen Deckelbauteil nach dem Oberbegriff des Anspruchs 14, eine Verfahren zur Herstellung eines integriert optischen Bauteils nach dem Oberbegriff der Ansprüche 20 und 21 und eine integriert optischen Bauteil nach dem Oberbegriff der Ansprüche 22 und 23.

Aus der Druckschrift DE 42 17 553 A ist ein Verfahren und eine Vorrichtung zum Ankoppeln von lichtleitenden Fasern an eine integriert-optische Komponente bekannt, die einen Basis- und einen Deckelteil umfaßt. Dabei weist der Zentralabschnitt des Basisteils ein optisches Bauelement mit integrierten Wellenleitern auf, während in eine Randabschnitt des Basisteils Nuten zur Aufnahme von Fasern vorgesehen sind. Bei der Montage werden die Fasern zunächst außerhalb des Basisteils als Montagesatz gehalten, aus welche die Faserenden ragen, worauf die Faserenden durch den Montagesatz in die Nuten gesenkt und dort durch den Deckelteil fixiert werden, um damit die Kerne der Fasern auf die integrierten Wellenleiter auszurichten.

Aus der WO 94/08263 ist ein Verfahren zum Herstellen eines Deckels für eine integriert optische Schaltung bekannt. Dabei wird ein optisches Bauelement in einen Formstempel eingelegt, welcher Justierelemente aufweist. Bei Einlegen wird das optische Bauelement mittels der Justierelemente auf dem Formstempel justiert. Durch Gießen einer aushärtbaren Flüssigkeit um das optische Bauelement herum wird ein Deckel, welcher das optische Bauelement enthält, hergestellt. Bei Gießverfahren handelt es sich um ein Spritzguß- oder Spritzprägeverfahren, bei dem die aushärtbare Flüssigkeit unter Druck- und/oder Temperatureinwirkung in eine gewünschte Form gebracht und ausgehärtet wird. Die aushärtbare Flüssigkeit weist bei diesem Verfahren eine hohe Viskosität auf, die zwar relativ exakte Außenabmessungen des entstehenden optischen Bauelements zuläßt, aber bezüglich der Abformbarkeit Grenzen setzt.

### Vorteile der Erfindung

Das erfindungsgemäße Verfahren zur Herstellung eines integriert optischen Deckelbauteils mit den kennzeichnenden Merkmalen des Anspruchs 1 hat demgegenüber den Vorteil, daß aufgrund der geringen Viskosität von Reaktionsgußmassen und der damit verbundenen guten Kriechfähigkeit eine äußerst präzise Abformung von einem mit Erhebungen mit nahezu beliebig komplizierter Anordnung von Hohlräumen versehenen Formstempel erreichbar ist. Zudem weist das so hergestellte Deckelbauteil eine hohe Planarität an der Unterseite auf. Außerdem ist eine solche Reaktionsgußmasse in der Entwicklung und Herstellung billiger als vergleichbare Spritzgußmassen. Da ein vorgefertigter, trogförmiger Behälter als Außenumrandung für das Deckelbauteil fungiert, wird trotz der geringen Viskosität der Reaktionsgußmasse erreicht, daß eine präzise definierte Außenkontur für die weitere Verwendung des Deckelbauteils zur Verfügung steht. Außerdem hat die Verwendung einer Reaktionsgußtechnik den Vorteil, daß keine hohen mechanischen Kräfte auf das Deckelbauteil oder die auszuhärtende Masse wirken, wodurch eine Verschiebung relativ zum Formstempel aufgrund der mechanischen Kräfte nahezu ausgeschlossen ist. Ebenso ist die Gefahr der Verschiebung von einlegbaren elektrooptischen Bauelementen verringert.

Durch die in den Unteransprüchen aufgeführten Maßnahmen sind vorteilhafte Weiterbildungen und Verbesserungen des im Anspruch 1 angegebenen Verfahrens möglich.

Es erweist sich als besonders vorteilhaft, die flüssige Reaktionsgußmasse zusammen mit dem trogförmigen Behälter so abzukühlen, daß eine Erhöhung der Viskosität der Reaktionsgußmasse erfolgt, und die Temperatur erst nach dem Aufsetzen des trogförmigen Behälters mit der abgekühlten Reaktionsgußmasse auf den Formstempel zu erhöhen, da so ein trogförmiger Behälter ohne eine zusätzliche Einfüllöffnung für die Herstellung des Deckelbauteils verwendet werden kann, wodurch daß das fertige entstehende Deckelbauteil eine geschlossene Form aufweist. Außerdem können auf diese Weise viele trogförmige Behälter mit einer entsprechend abgemessenen Menge der Reaktionsgußmasse bereits tiefgekühlt gelagert werden und müssen bei Bedarf lediglich dem Kühlfach entnommen, auf den Formstempel aufgesetzt und erwärmt werden, was eine flexible Fertigung erlaubt.

Das Vorsehen einer Aussparung im Boden des trogförmigen Behälters zum Einbringen der flüssigen Reaktionsgußmasse in den trogförmigen Behälter stellt insofern eine vorteilhafte Maßnahme dar, als das Einfüllen erst nach dem Aufsetzen des trogförmigen Behälters auf den Formstempel erfolgt, so daß sichergestellt ist, daß keine flüssige Reaktionsgußmasse außerhalb des trogförmigen Behälters zu liegen kommt.

Das Aufsetzen eines elektrooptischen Bauelements auf den Formstempel dort, wo es danach vom trogförmigen Behälter überdeckt wird, bringt den Vorteil mit sich, daß gleichzeitig mit der Herstellung des Deckelbauteils auch ein Einguß eines solchen elektrooptischen Bauelements in das Deckelbauteil erfolgt.

Das Andrücken des elektroopischen Bauelementes während des Reaktionsvorgangs gegen die Oberfläche des Formstempels dient in vorteilhafter Weise der Verhinderung des Aufschwimmens des elektrooptischen Bauelements in der noch flüssigen Reaktionsgußmasse.

Die Anwendung einer magnetischen Kraft zum Drücken des elektrooptischen Bauelements gegen den Formstempel ist vorteilhaft, da die Ausnutzung der Wirkung eines Magnetfeldes auch durch das elektrooptische Bauelement und/oder den Formstempel hindurch möglich ist. Außerdem ist es preisgünstig, eine dafür geeignete Vorrichtung anzubringen und diese gegebenenfalls im Deckelbauteil auch nach dessen Fertigstellung zu belassen.

Das Erhitzen des Formstempels zur Einleitung des Reaktionsvorgangs ist deswegen vorteilhaft, weil die Reaktionsgußmasse dadurch vom Formstempel aus erhitzt wird, wodurch ein Polymerisieren der Reaktionsgußmasse zuerst am Formstempel erfolgt, was eine präzise Struktur genau dort ergibt, wo die größte Genauigkeit erforderlich ist.

Das Erhitzen des Formstempels von seiner Unterseite her in großflächiger Form bringt den Vorteil mit sich, daß ein annähernd ebener Temperaturverlauf in etwa parallel zur Formstempeloberfläche erzeugt wird, wodurch ein äußerst homogener Reaktionsvorgang an der Formstempeloberfläche erzeugt wird, was die Genauigkeit des Deckelbauteils erhöht.

Die Auswahl eines ferromagnetischen Materials für den Formstempel und dessen Auflegen auf eine Trägerplatte, wo der Formstempel mittels eines Magnetfeldes gehalten wird, erweist sich als vorteilhaft, da zur Halterung des Formstempels dann keine zusätzlichen mechanischen Halteelemente vorgesehen sein müssen.

Es ergibt sich der Vorteil, daß die Gefahr eines Verrutschens der verfestigten Reaktionsgußmasse zum Boden des trogförmigen Behälters hin verringert wird, wenn im trogförmigen Behälter eine entsprechende Hilfsstruktur angeordnet wird.

Die Verfestigung der Reaktionsgußmasse in wenigstens zwei Temperaturstufen führt zu dem Vorteil, daß zunächst bei einer ersten Temperaturstufe eine äußerst genaue Polymerisation direkt an der Oberfläche des Formstempels erfolgt und erst bei einer oder mehreren höheren Temperaturen eine Beseitigung des Restmonomers der Reaktionsgußmasse durchgeführt werden kann.

Eine zusätzlich eingefüllte Füllmasse im trogförmigen Behälter ist geeignet, die mechanische Stabilität des entstehenden Deckelbauteils bei nur geringer Preisauswirkung zu erhöhen, da es sich bei der Füllmasse nicht um ein optisch hochwertiges Material handeln muß.

Zusätzliche Stützelemente verbessern die mechanische Stabilität des entstehenden Deckelbauteils, da sich die flüssige Reaktionsgußmasse mit den Stützelementen beim Verfestigen so verbindet, daß die Stützelemente beim späteren Aufbringen des Deckelbauelements beispielsweise auf ein Substrat die dabei entstehenden mechanischen Kräfte aufnehmen, wodurch die Gefahr einer Beschädigung der verfestigten Reaktionsgußmasse verringert wird.

Das erfindungsgemäße integriert optische Deckelbauteil mit den kennzeichnenden Merkmalen des Anspruchs 14 hat den Vorteil, daß durch die durch Reaktion verfestigte Reaktionsgußmasse das integriert optischen Deckelbauteil eine optisch hochwertige und einen besonders exakten Abdruck des Formstempels aufweisende, besonders planare Oberfläche der Unterseite aufweist. Außerdem ist das integriert optischen Deckelbauteil preisgünstig herstellbar. Da ein vorgefertigter, trogförmiger Behälter als Außenumrandung für das Deckelbauteil fungiert, steht eine präzise definierte Außenkontur für die weitere Verwendung des Deckelbauteils zur Verfügung.

Durch die in den dem Anspruch 14 untergeordneten Ansprüchen aufgeführten Maßnahmen sind vorteilhafte Weiterbildungen und Verbesserungen des im Anspruch 14 angegebenen Verfahrens möglich.

Ein integriert optisches Deckelbauteil mit einem eingegossenen elektrooptischen Bauelement stellt ein preiswert herstellbares Bauteil dar, welches in vorteilhafter Weise eine Wandlung optischer Signale in elektrische Signale und umgekehrt erlaubt.

Durch die Anordnung eines Permanentmagneten oder einer ferromagnetischen Scheibe auf dem elektrooptischen Bauelement ist das integriert optische Deckelbauteil besonders präzise herstellbar, da ein magnetisches Andrücken des elektrooptischen Bauelements beim Eingießen erfolgt.

EIne Füllmasse im Innenraum des integriert optischen Deckelbauteils dient in vorteilhafter Weise der Erhöhung der mechanischen Stabilität des integriert optischen Deckelbauteils.

Es ergibt sich der Vorteil, daß die Gefahr eines Verrutschens der verfestigten Reaktionsgußmasse zum Boden des trogförmigen Behälters hin verringert wird, wenn das integriert optischen Deckelbauteil eine entsprechende Hilfsstruktur aufweist.

Auch Stützelemente im Innenraum des integriert optischen Deckelbauteils sind geeignet, die mechanische Stabilität des integriert optischen Deckelbauteils zu erhöhen.

Das integriert optische Deckelbauteil ist in vorteilhafter Weise geeignet, ein integriert optisches Bauteil herzustellen, indem es gemäß dem Anspruch 20 auf ein Bodenteil gesetzt wird und zusätzlich ein Polymerklebstoff eingefüllt wird, der die im Deckelbauteil vorhandene Vertiefung ausfüllt, wodurch ein Wellenleiter entsteht. Das erfindungsgemäße Verfahren zur Herstellung eines integriert optischen Bauteils mit einem integriert optischen Deckelbauteil mit den kennzeichnenden Merkmalen des Anspruchs 20 hat somit den Vorteil, daß aufgrund der exakten Außenabmessungen des integriert optischen Deckelbauteils eine präzise Justierung auf dem Bodenteil möglich ist. Außerdem dient der Polymerklebstoff gleichzeitig als Klebstoff und als optischer Wellenleiter.

Ebenso ist es aber gemäß dem Anspruch 21 möglich, ein integriert optisches Bauteil unter Verwendung eines integriert optischen Deckelbauteils herzustellen, indem das Deckelbauteil auf ein Substrat mit einem Wellenleitergraben aufgesetzt wird, der beim Verkleben mit dem integriert optischen Deckelbauteil mit dem Polymerklebstoff gefüllt wird. Das erfindungsgemäße Verfahren zur Herstellung eines integriert optischen Bauteils mit einem integriert optischen Deckelbauteil mit den kennzeichnenden Merkmalen des Anspruchs 21 hat somit den Vorteil, daß aufgrund der exakten Außenabmessungen des integriert optischen Deckelbauteils eine präzise Justierung bezüglich des im Substrat befindlichen Wellenleitergrabens möglich ist. Außerdem dient der Polymerklebstoff gleichzeitig als Klebstoff und als optischer Wellenleiter.

Das erfindungsgemäße integriert optische Bauteil mit den kennzeichnenden Merkmalen des Anspruchs 22 hat den Vorteil, daß ein präzise justiertes und auch justierbares Bauteil vorliegt, da die Außenabmessungen des integriert optischen Deckelbauteils bereits sehr exakt sind.

Das erfindungsgemäße integriert optische Bauteil mit den kennzeichnenden Merkmalen des Anspruchs 23 hat den Vorteil, daß ein Bauteil vorliegt, bei dem das integriert optische Bauteil präzise zu einem entstehenden Wellenleiter in einem Substrat justiert ist, da die Außenabmessungen des integriert optischen Deckelbauteils bereits sehr exakt sind.

### Zeichnung

Ausführungsbeispiele der Erfindung sind in der Zeichnung dargestellt und in der nachfolgenden Beschreibung näher erläutert.

Es zeigen:
Figur 1 einen Schnitt durch eine Vorrichtung mit einem auf einem Formstempel aufgesetzten trogförmigen Behälter und mit einem elektrooptischen Bauelement,
Figur 2 einen Schnitt durch eine Vorrichtung mit einem auf einem Formstempel aufgesetzten trogförmigen Behälter, mit einer abgekühlten Reaktionsgußmasse,
Figur 3 eine perspektivische Darstellung eines trogförmigen Behälters,
Figur 4 einen Schnitt durch ein Bodenteil und ein integriert optisches Deckelbauteil,
Figur 5 einen Schnitt durch ein Substrat und ein integriert optisches Deckelbauteil.

### Beschreibung der Ausführungsbeispiele

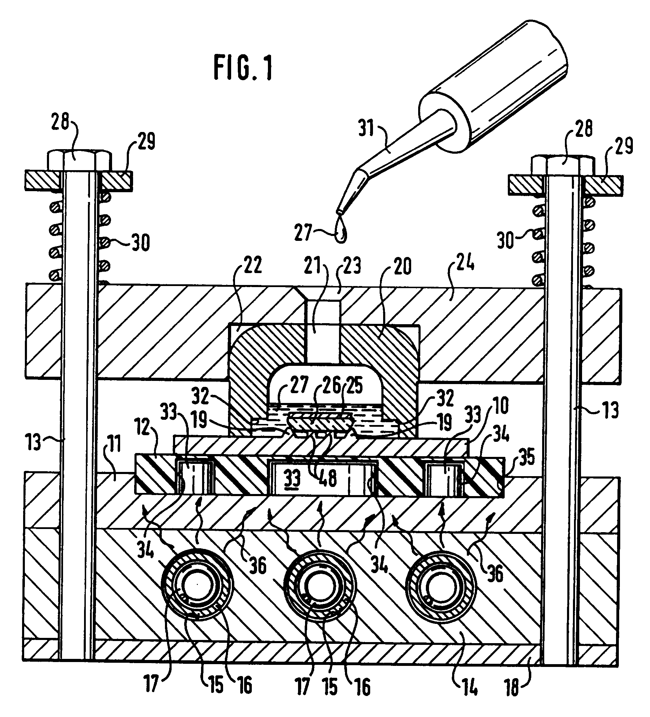

In Figur 1 ist eine flache Bodenplatte 18 dargestellt, die zwei in etwa parallel zueinander und vertikal zur Bodenplatte 18 ausgerichtete Führungsstangen 13 aufweist. Weiter ist eine flache Grundplatte 14 vorgesehen, welche zwei Löcher aufweist, durch die die Führungsstangen 13 der Bodenplatte 18 ragen. Die Grundplatte 14 liegt mit ihrer Unterseite bündig auf der Oberseite der Bodenplatte 18 auf. Weiter ist eine flache Zwischenplatte 11 vorgesehen, welche ebenfalls zwei Löcher aufweist, durch die die Führungsstangen 13 ragen. Die Zwischenplatte 11 liegt mit ihrer Unterseite auf der Oberseite der Grundplatte 14. Die Grundplatte 14 weist in etwa parallel zu ihrer flachen Oberseite mehrere nebeneinanderliegende zylinderförmige Aussparungen 15 auf, wobei in jeder zylinderförmigen Aussparung 15 eine Hülse 16 mit einer darin angeordneten Drahtwendel 17 angeordnet ist. Beim Durchfließen elektrischen Stroms durch die Drahtwendeln 17 geben diese eine Wärmestrahlung 36 ab. Die Zwischenplatte 11 weist im Bereich zwischen den beiden Führungsstangen 13 auf ihrer Oberseite ein in etwa kreisförmige Vertiefung 35 auf, in die eine in etwa kreisscheibenförmige, flache Trägerplatte 12 einlegbar ist. Die Trägerplatte 12 liegt dabei annähernd paßgenau in der Vertiefung 35, wobei mehrere in der Trägerplatte 12 angeordnete Sacklöcher 34 mit ihrer Öffnung nach unten zur Zwischenplatte 11 zeigen. In den Sacklöchern 34 befinden sich mehrere Permanentmagnete 33. Auf der Oberseite der Trägerplatte 12 ist ein flacher Formstempel 10 angeordnet, der auf seiner Oberseite mehrere dachfirstförmige Erhebungen 19 und außerdem mehrere quaderförmige Erhebungen 48 aufweist. Auf den quaderförmigen Erhebungen 48 stützt sich ein elektrooptisches Bauelement 26 ab, dessen äußere Flanken an den dachfirstförmigen Erhebungen 19 anliegen. Auf der den Erhebungen 19, 48 abgewandten Oberfläche seiner Rückseite weist das elektrooptische Bauelement 26 eine ferromagnetische Scheibe 25 auf. Weiter vorgesehen ist ein einseitig offener, trogförmiger Behälter 20, dessen offene Seite nach unten, zum Formstempel 10 hin zeigt. Der trogförmige Behälter 20 liegt mit seiner durch die Stirnfläche seiner Seitenwände gebildeten Umrandung auf dem Formstempel 10 auf und ist in seinem Innenraum oberhalb der Oberfläche des Formstempels 10 teilweise mit einer Reaktionsgußmasse 27 gefüllt. Die Reaktionsgußmasse 27 umschließt dabei das elektrooptische Bauelement 26. Der trogförmige Behälter 20 ist zu einem Teil in einer Halterungsaussparung 22 in einer flachen Deckelplatte 24 gehaltert. Der trogförmige Behälter 20 weist in seinem obenliegenden Boden eine Aussparung 21 auf, welche mit einer Einfüllöffnung 23, welche in der Deckelplatte 24 angeordnet ist, fluchtet. Die Deckelplatte 24 ist gleichfalls mittels zweier Bohrungen, durch die die Führungsstangen 13 ragen, über die Führungsstangen 13 geführt und wird über zwei Spiralfedern 30, welche um die Führungsstangen 13 herum angeordnet sind, nach unten gedrückt. Nach oben stützen sich die Spiralfedern 30 an je einer Anschlagplatte 29 ab, welche mit je einer Anpreßschraube 28 auf der Führungsstange 13 befestigt sind. Weiter ist eine Pipette 31 vorgesehen, mittels der die Reaktionsgußmasse 27 durch die Einfüllöffnung 23 und die Aussparung 21 in den trogförmigen Behälter 20 einfüllbar ist. Der trogförmige Behälter 20 weist außerdem nahe der Umrandung in seinem Innenraum eine Hilfsstruktur 32 in Form eines an den Seitenwänden rundum laufenden Absatzes auf.

Der trogförmige Behälter 20 wird zunächst in die Deckelplatte 24 eingelegt, so daß dessen Boden in der Halterungsaussparung 22 zu liegen kommt. Vorzugsweise ist die Halterungsaussparung 22 so ausgebildet, daß ein leichtes Klemmen des trogförmigen Behälters 20 erfolgt. Der trogförmige Behälter 20 besteht vorzugsweise aus einem Kunststoff, wie beispielsweise Polykarbonat, welcher jedoch nicht unbedingt optisch transparent sein muß. Weiter wird die beschriebene Anordnung zunächst soweit fertiggestellt, daß die Bodenplatte 18, die Grundplatte 14 und die Zwischenplatte 11 übereinander liegen. Ebenso wird die Trägerplatte 12 mit den in die Sacklöcher 34 eingelegten Permanentmagneten 33 in die Vertiefung 35 der Zwischenplatte 11 eingelegt.

Auf die Trägerplatte 12 wird dann der Formstempel 10 aufgelegt. Durch die Permanentmagnete 33 wird der Formstempel 10 in seiner Lage fixiert. Der Formstempel 10 wird dabei so ausgerichtet, daß er eine definierte Lage in bezug auf den später aufzusetzenden trogförmigen Behälter 20 einnimmt. Anschließend wird das elektrooptische Bauelement 26 mit der auf seiner Rückseite befindlichen ferromagnetischen Scheibe 25 in den Formstempel 10 eingelegt, wobei die dachfirstförmigen Erhebungen 19 und die quaderförmigen Erhebungen 48 eine automatische passive Justierung des elektrooptischen Bauelements 26 bezüglich des Formstempels 10 bewirken. Dann wird die Deckelplatte 24 mit dem eingelegten trogförmigen Behälter 20 mit der Öffnung des trogförmigen Behälters 20 nach unten auf die Anordnung aufgesteckt, wobei die Führungsstangen 13 die mechanische Führung der Deckelplatte 24 übernehmen. Durch Anbringen der Spiralfedern 30 zusammen mit den Anschlagplatten 29 und den Anpreßschrauben 28 wird die Deckelplatte 24 mit dem trogförmigen Behälter 20 auf die Oberfläche des Formstempels 10 gepreßt. Sodann wird durch die Einfüllöffnung 23 und die Aussparung 21 mittels der Pipette 31 die flüssige Reaktionsgußmasse 27 in den Innenraum des trogförmigen Behälters 20 eingefüllt. Die ferromagnetische Andruckscheibe 25 bewirkt, daß das elektrooptische Bauelement 26 aufgrund der Magnetkräfte der Magneten 33 gegen die Oberfläche des Formstempels 10 gepreßt wird. Beim Einfließen der flüssigen Reaktionsgußmasse 27 in den trogförmigen Behälter 20 wird jeder zugängliche Zwischenraum innerhalb des trogförmigen Behälters 20 von der Reaktionsgußmasse 27 ausgefüllt. Die Reaktionsgußmasse 27 weist dazu vorzugsweise eine geringe Viskosität auf. Es ist dabei nicht notwendig, den trogförmigen Behälter 20 ganz mit der Reaktionsgußmasse 27 zu füllen.

Diese Anordnung wird nun von unten her beheizt, indem elektrischer Strom durch die Drahtwendeln 17 geschickt wird. Dadurch erwärmen sich die Hülsen 16 und dann auch die gesamte Grundplatte 14. Die Wärmestrahlung 36 gelangt somit von unten durch die Grundplatte 14, die Zwischenplatte 11, die Trägerplatte 12 und den Formstempel 10 zu dessen Oberseite. Die Drahtwendeln 17 sind dabei vorzugsweise so gleichmäßig in der Grundplatte 14 verteilt, daß eine annähernd ebene Wärmestrahlung 36 von unten nach oben in Richtung auf den Formstempel 10 resultiert. Die flüssige Reaktionsgußmasse 27 besteht aus einem polymerisationsfähigen Monomer, welches mit Thermoinitiatoren vermischt ist. Durch die Thermoinitiatoren beginnt nun mit wachsender Temperatur ab einer gewissen Schwelltemperatur eine Polymerisation der Reaktionsgußmasse 27. Da die Wärmestrahlung 36 von unten an den Formstempel 10 geführt wird, beginnt die Polymerisation zuerst an der der Oberfläche des Formstempels 10 nächstgelegenen Fläche der Reaktionsgußmasse 27.

Vorzugsweise wird die Reaktionsgußmasse 27 dabei so zusammengesetzt, daß Thermoinitiatoren mit wenigstens zwei unterschiedlichen Temperaturschwellen darin enthalten sind. Dann genügt ein Beheizen der Anordnung bis zur ersten Temperaturschwelle, um zumindest ein teilweises Polymerisieren der Reaktionsgußmasse 27 zu bewirken. Das Beseitigen des dabei übrigbleibenden Restmonomers durch Erhitzen auf die zweite Schwelltemperatur kann dann in einem separaten Heizofen, unabhängig von der hier dargestellten Anordnung erfolgen. Für die Anwendung im integriert optischen Anwendungsbereich ist eine zumindest im Bereich um die zu verwendenden optischen Wellenlängen optisch transparente Reaktionsgußmasse 27 zu wählen, damit eine verlustarme Führung der optischen Signale erreicht werden kann. Anstelle der Andruckscheibe 25 auf der Rückseite des elektrooptischen Bauelements 26 ist es ebenso vorgesehen, Permanentmagnete am oder im elektrooptischen Bauelement 26 anzubringen, um ein Aufschwimmen des elektrooptischen Bauelements 26 in der flüssigen Reaktionsgußmasse 27 zu verhindern. Der Anbringungsort für die Andruckscheibe 25 oder entsprechende Permanentmagnete ist dabei variabel und vorzugsweise auf der dem Formstempel 10 nahe gelegenen Unterseite des elektrooptischen Bauelements 26, da sich durch den im integriert optischen Anwendungsbereich geringen Abstand des elektrooptischen Bauelements 26 vom Formstempel 10 dann eine hohe Andruckkraft entwickelt.

Nach dem Aushärten der Reaktionsgußmasse 27 wird die Anordnung wieder entformt, indem das aus trogförmigem Behälter 20 mit der verfestigten Reaktionsgußmasse 27 und dem darin eingebetteten elektrooptischen Bauelement 26 bestehende, entstandene Deckelbauteil vom Formstempel 10 und aus der Halterungsaussparung 22 entfernt wird. Alternativ zur magnetischen Andrückung des elektrooptischen Bauelements 26 können auch mechanische Komponenten vorgesehen sein, die diese Funktion ausüben.

Ebenso ist für das Andrücken des trogförmigen Behälters 20 an den Formstempel 10 jede äquivalente Druckerzeugung (Hydraulik, Pneumatik etc.) einsetzbar. Die Heizung kann ebenfalls auf beliebige andere Weise ( Verbrennung, Induktion etc.) erfolgen. An Stelle der Führungsstangen 13 können auch andere Führungs- bzw. Positioniervorrichtungen oder -verfahren treten.

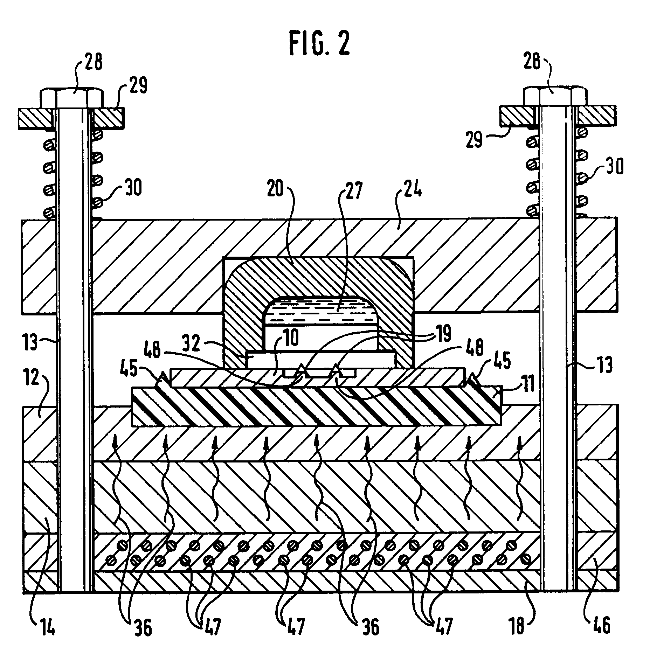

In Figur 2 ist ein weiteres Ausführungsbeispiel für eine Anordnung zum Herstellen des Deckelbauteils dargestellt. Gleiche Teile wurden hierbei mit gleichen Nummern versehen. Die Anordnung in Figur 2 unterscheidet sich von der in Figur 1 dargestellten Anordnung durch folgende Punkte: Der trogförmige Behälter 20 weist keine Aussparung 21 auf, sondern ist ein am Boden geschlossener Behälter. Die Reaktionsgußmasse 27 haftet in Form eines gekühlten Gels am Boden des trogförmigen Behälters 20. Außerdem sind die Erhebungen 19, 48 auf dem Formstempel 10 in diesem Ausführungsbeispiel in einer Vertiefung im Formstempel 10 angeordnet, wobei die Firstlinien der dachfirstförmigen Erhebungen 19 mit den Längssymmetrieachsen der quaderförmigen Erhebungen 48 fluchten. Der Formstempel 10 wird hier außerdem mittels Justiererhebungen 45 auf der Zwischenplatte 11 in seiner Lage fixiert. Die Zwischenplatte 11 ist hier massiv und nicht mit Magneten in Sacklöchern ausgeführt. Außerdem weist die Grundplatte 14 hier nicht die Heizanordnungen aus zylinderförmiger Aussparung, Hülse und Drahtwendel auf, wie in Figur 1 dargestellt, sondern ist oberhalb einer Heizplatte 46 angeordnet, in der viele einzelne Heizdrähte 47 nebeneinander angeordnet sind.

Die Reaktionsgußmasse 27 wurde in einem vorhergehenden Schritt in den trogförmigen Behälter 20 eingefüllt, wobei dabei dessen Boden noch unten lag. Dann erfolgte eine Abkühlung, so daß sich die Viskosität der Reaktionsgußmasse 27 erhöhte. Dadurch nahm die Reaktionsgußmasse 27 die Form eines Gels an, welches am Boden des trogförmigen Behälters 20 haftet. Die so gekühlte Anordnung aus trogförmigem Behälter 20 und Reaktionsgußmasse 27 wird nun, ebenso wie zu Figur 1 beschrieben, in die Anordnung eingesetzt. Beim langsamen Erwärmen verflüssigt sich die Reaktionsgußmasse 27 und folgt der Schwerkraft, so daß anschließend die verflüssigte Reaktionsgußmasse 27 auf der Oberfläche des Formstempels 10 innerhalb des Innenraums des trogförmigen Behälters 20 zu liegen kommt. Anschließend erfolgt wiederum ein Erwärmen durch die Wärmestrahlung 36, welche hier durch die stromdurchflossenen Heizdrähte 47 erzeugt wird. Anschließend erfolgt wiederum ein Entformen des integriert optischen Deckelbauteils aus trogförmigem Behälters 20 mit der ausgehärteten Reaktionsgußmasse 27.

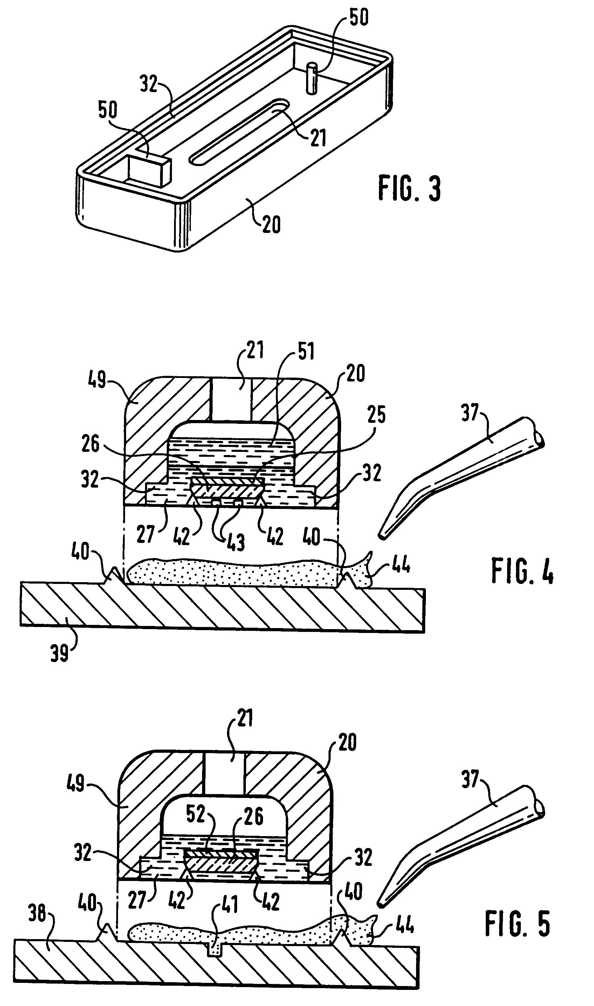

Figur 3 zeigt eine perspektivische Darstellung eines trogförmigen Behälters 20. In seinem Innenraum weist dieser zwei zusätzliche Stützelemente 50 auf. Das eine Stützelement 50 ist in Form einer Säule, welche auf dem Boden des trogförmigen Behälters 20 aufgebracht ist, ausgeführt. Das andere Stützelement 50 hat die Form einer annähernd senkrecht zu einer Seitenwand verlaufenden Zusatzwand.

Die Stützelemente tauchen beim Herstellvorgang für das integriert optische Deckelbauteil in die flüssige Reaktionsgußmasse 27 ein. Die flüssige Reaktionsgußmasse 27 löst üblicherweise das Material des trogförmigen Behälters 20 und der Stützelemente 50 etwas an und verbindet sich dann beim thermischen Aushärten damit. Dadurch können die Stützelemente 50 später mechanische Kräfte aufnehmen, welche sonst die verfestigte Reaktionsgußmasse 27 beschädigen könnten.

In Figur 4 ist gezeigt, wie der trogförmige Behälter 20 zusammen mit der ausgehärteten Reaktionsgußmasse 27 ein Deckelbauteil 49 bildet. Beim Entformen von der in den Figuren 1, 2 dargestellten Anordnungen hinterlassen die Erhebungen 19, 48 entsprechende Vertiefungen 42, 43 im Deckelbauteil 49. Zusätzlich wurde nach dem Verfestigen der Reaktionsgußmasse 27 eine Füllmasse 51 in den trogförmigen Behälter eingefüllt. Das Deckelbauteil 49 wird nun auf ein Bodenteil 39 aufgesetzt, welches an seiner Oberseite zwei dachfirstförmige Justierelemente 40 aufweist, die die laterale Position des Deckelbauteils 49 bestimmen. Außerdem wird zwischen Deckelbauteil 49 und Bodenteil 39 mittels eines Auftragswerkzeugs 37 ein Polymerklebstoff 44 eingebracht.

Beim Aufsetzen des Deckelbauteils 49 auf das Bodenteil 39 wirkt ein Teil des Polymerklebstoffs als verbindender Werkstoff, und ein anderer Teil des Polymerklebstoffs 44 wird in die Vertiefungen 42, 43 gedrängt. Die quaderförmigen Vertiefungen 43 dienen hierbei als Wellenleitergraben, wobei durch das Ausfüllen mittels des Polymerklebstoffs 44 ein Wellenleiter darin entsteht. Dadurch wurde ein integriert optisches Bauteil hergestellt. Die Füllmasse 51 muß im Gegensatz zur Reaktionsgußmasse 27 nicht eine hohe optische Qualität aufweisen, sondern dient hier vor allem der mechanischen Stabilität. Dadurch kann die optisch wirksame Schichtdicke der verfestigten Reaktionsgußmasse 27 sehr dünn gehalten werden, was eine preisgünstige Herstellung ermöglicht.

In Figur 5 ist eine ähnliche Anordnung wie in Figur 4 gezeigt, bei der das Deckelbauteil 49 allerdings auf ein Substrat 38, welches einen Wellenleitergraben 41 aufweist, aufgesetzt wird. In diesem Fall weist das Deckelbauteil 49 nur das eingegossene elektrooptische Bauelement 26 und die dachfirstförmigen Vertiefungen 42 und keine quaderförmigen Vertiefungen auf. Außerdem ist an Stelle der Scheibe 25 ein Permanentmagnet 52 auf dem elektrooptischen Bauelement 26 aufgebracht, der dazu dient, das elektrooptische Bauelement 26 an den Formstempel 10 zu drücken.

Vorzugsweise ist der Permanentmagnet 52 auf der Unterseite des elektrooptischen Bauelements 26 angebracht, um die wirksame magnetische Anziehungskraft zu maximieren. Auf das Substrat 38 wird der Polymerklebstoff 44 aufgebracht und fließt unter anderem in den Wellenleitergraben 41. Das Deckelbauteil 49 wird durch die Justierelemente 40 in seiner Lage bezüglich des mit Polymerklebstoff 44 gefüllten Wellenleitergrabens 41 justiert. Somit fungiert der Polymerklebstoff 44 auch hier gleichzeitig als Klebstoff zur Verbindung des Deckelbauteils 49 mit dem Substrat 38, als auch zur Bildung eines Wellenleiters im Wellenleitergraben 41, welcher optisch an das elektrooptische Bauelement 26 angekoppelt ist.

## Patentansprüche

1. Verfahren zur Herstellung eines integriert optischen Deckelbauteils dadurch gekennzeichnet, daß ein auf einer Seite offener trogförmiger Behälter (20) mit seiner Öffnung nach unten auf einen Formstempel (10) gesetzt wird, welcher wenigstens eine Erhebung (19, 48) aufweist, und daß in den Innenraum des trogförmigen Behälters (20) eine optisch transparente, flüssige Reaktionsgußmasse (27) eingefüllt wird, die sich auf der innerhalb des trogförmigen Behälters (20) liegenden Oberfläche des Formstempels (10) verteilt und daß die Reaktionsgußmasse (27) dann durch Erwärmen zur Reaktion gebracht wird, wodurch sich die Reaktionsgußmasse (27) wenigstens teilweise verfestigt und daß das aus dem trogförmigen Behälter (20) und der wenigstens teilweise verfestigten Reaktionsgußmasse (27) bestehende integriert optische Deckelbauteil (49) vom Formstempel (10) wieder abgehoben wird, wobei die wenigstens eine Erhebung (19, 48) in der wenigstens teilweise verfestigten Reaktionsgußmasse (27) wenigstens eine Vertiefung (42, 43) hinterläßt.

2. Verfahren nach Anspruch 1, dadurch gekennzeichnet, daß die flüssige Reaktionsgußmasse (27) vor dem Aufsetzen des trogförmigen Behälters (20) auf den Formstempel (10) in den trogförmigen Behälter (20) gefüllt wird und so abgekühlt wird, daß daraus eine Erhöhung der Viskosität der Reaktionsgußmasse (27) resultiert und daß der trogförmige Behälter (20) mit der viskosen Reaktionsgußmasse (27) dann umgedreht und auf den Formstempel (10) aufgesetzt und danach wieder erwärmt wird, so daß die Reaktionsgußmasse (27) dabei wieder in den flüssigen Zustand gerät.

3. Verfahren nach Anspruch 1, dadurch gekennzeichnet, daß vor dem Aufsetzen des trogförmigen Behälters (20) auf den Formstempel (10) in den Boden des trogförmigen Behälters (20) eine Aussparung (21) eingebracht wird, durch die die flüssige Reaktionsgußmasse (27) nach dem Aufsetzen in den trogförmigen Behälter (20) eingefüllt wird.

4. Verfahren nach einem der Ansprüche 1 bis 3, dadurch gekennzeichnet, daß vor dem Aufsetzen des trogförmigen Behälters (20) auf den Formstempel (10) wenigstens ein elektrooptisches Bauelement (26) auf den Formstempel (10) auf einer Stelle aufgesetzt wird, welche danach vom trogförmigen Behälter (20) überdeckt wird.

5. Verfahren nach Anspruch 4, dadurch gekennzeichnet, daß das elektrooptische Bauelement (26) während des Reaktionsvorgangs gegen die Oberfläche des Formstempels (10) gedrückt wird.

6. Verfahren nach Anspruch 5, dadurch gekennzeichnet, daß das elektrooptische Bauelement (26) mittels einer magnetischen Kraft gegen die Oberfläche des Formstempels (10) gedrückt wird.

7. Verfahren nach einem der Ansprüche 1 bis 6, dadurch gekennzeichnet, daß zur Einleitung des Reaktionsvorgangs der Formstempel (10) erhitzt wird.

8. Verfahren nach Anspruch 7, dadurch gekennzeichnet, daß der Formstempel (10) von seiner Unterseite her großflächig erhitzt wird.

9. Verfahren nach einem der Ansprüche 1 bis 8, dadurch gekennzeichnet, daß für den Formstempel (10) ein ferromagnetisches Material ausgewählt wird und daß vor dem Aufsetzen des trogförmigen Behälters (20) auf den Formstempel (10) der Formstempel (10) auf eine Trägerplatte (12) aufgelegt wird, wo er mittels eines Magnetfeldes gehalten wird.

10. Verfahren nach einem der Ansprüche 1 bis 9, dadurch gekennzeichnet, daß im trogförmigen Behälter (20) eine Hilfsstruktur (32) angeordnet wird, die die Gefahr eines Verrutschens der verfestigten Reaktionsgußmasse (27) zum Boden des trogförmigen Behälters (20) hin verringert.

11. Verfahren nach einem der Ansprüche 1 bis 10, dadurch gekennzeichnet, daß die Reaktionsgußmasse (27) in wenigstens zwei Temperaturstufen verfestigt wird, wobei bei der ersten, niedrigeren Temperaturstufe eine Verfestigung des Anteils der Reaktionsgußmasse (27) in der unmittelbaren Nähe der Oberfläche des Formstempels (10) erfolgt und erst bei der zweiten höheren Temperaturstufe eine die gesamte Reaktionsgußmasse (27) umfassende Verfestigung einsetzt.

12. Verfahren nach einem der Ansprüche 1 bis 11, dadurch gekennzeichnet, daß in einen zwischen der verfestigten Reaktionsgußmasse (27) und dem Boden des trogförmigen Behälters (20) verbleibenden Hohlraum eine Füllmasse (51) eingefüllt wird.

13. Verfahren nach einem der Ansprüche 1 bis 12, dadurch gekennzeichnet, daß im trogförmigen Behälter (20) wenigstens ein Stützelement (50) angeordnet wird, welches sich von einer Seitenwand oder dem Boden des trogförmigen Behälters (20) in dessen Innenraum hinein erstreckt und das sich beim Verfestigen der Reaktionsgußmasse (27) mit dieser verbindet.

14. Integriert optisches Deckelbauteil, dadurch gekennzeichnet, daß das integriert optische Deckelbauteil (49) einen auf einer Seite mit einer durch Reaktion verfestigten Reaktionsgußmasse (27) verschlossenen trogförmigen Behälter (20) umfaßt und daß die verfestigte Reaktionsgußmasse (27) auf der dem Innenraum des trogförmigen Behälters (20) entgegengesetzten Seite wenigstens eine Vertiefung (42, 43) aufweist.

15. Integriert optisches Deckelbauteil nach Anspruch 14, dadurch gekennzeichnet, daß in der verfestigten Reaktionsgußmasse (27) wenigstens ein elektrooptisches Bauelement (26) wenigstens teilweise eingebettet ist.

16. Integriert optisches Deckelbauteil nach Anspruch 15, dadurch gekennzeichnet, daß das elektrooptische Bauelement (26) wenigstens einen Permanentmagneten (52) oder eine ferromagnetische Scheibe (25) aufweist.

17. Integriert optisches Deckelbauteil nach einem der Ansprüche 14 bis 16, dadurch gekennzeichnet, daß im Innenraum des trogförmigen Behälters (20) eine Füllmasse (51) auf der verfestigten Reaktionsgußmasse (27) angeordnet ist.

18. Integriert optisches Deckelbauteil nach einem der Ansprüche 14 bis 17, dadurch gekennzeichnet, daß der trogförmige Behälter (20) wenigstens eine Hilfsstruktur (32) aufweist, die die Gefahr eines Verrutschens der verfestigten Reaktionsgußmasse (27) zum Boden des trogförmigen Behälters (20) hin verringert.

19. Integriert optisches Deckelbauteil nach einem der Ansprüche 14 bis 18, dadurch gekennzeichnet, daß der trogförmige Behälter (20) wenigstens ein Stützelement (50) aufweist, welches sich von einer Seitenwand oder dem Boden des trogförmigen Behälters (20) in dessen Innenraum hinein erstreckt und mit der Reaktionsgußmasse (27) wenigstens teilweise verbunden ist.

20. Verfahren zur Herstellung eines integriert optischen Bauteils mit einem integriert optischen Deckelbauteil nach einem der Ansprüche 14 bis 19, dadurch gekennzeichnet, daß das integriert optische Deckelbauteil (49) auf ein Bodenteil (39) aufgesetzt wird, wobei wenigstens eine der wenigstens einen Vertiefung (42, 43) als Wellenleitergraben dient und daß zwischen das Bodenteil (39) und die verfestigte Reaktionsgußmasse (27) ein Polymerklebstoff (44) eingefüllt wird, der beim Aufsetzen den Wellenleitergraben füllt, wodurch das das integriert optische Deckelbauteil (49), das Bodenteil (39) und den Polymerklebstoff (44) umfassende integriert optische Bauteil entsteht.

21. Verfahren zur Herstellung eines integriert optischen Bauteils mit einem integriert optischen Deckelbauteil nach einem der Ansprüche 14 bis 19, dadurch gekennzeichnet, daß das integriert optische Deckelbauteil (49) auf ein Substrat (38) aufgesetzt wird, welches einen Wellenleitergraben (41) aufweist und daß zwischen das Substrat (38) und die verfestigte Reaktionsgußmasse (27) ein Polymerklebstoff (44) eingefüllt wird, der beim Aufsetzen den Wellenleitergraben (41) füllt, wodurch das das integriert optische Deckelbauteil (49), das Substrat (38) und den Polymerklebstoff (44) umfassende integriert optische Bauteil entsteht.

22. Integriert optisches Bauteil mit einem integriert optischen Deckelbauteil nach einem der Ansprüche 14 bis 19, dadurch gekennzeichnet, daß das integriert optische Bauteil ein integriert optisches Deckelbauteil (49) umfaßt, welches mittels eines Polymerklebstoffs (44) auf einem Bodenteil (39) befestigt ist, wobei Polymerklebstoff (44) die Vertiefung (42, 43) ausfüllt.

23. Integriert optisches Bauteil mit einem integriert optischen Deckelbauteil nach einem der Ansprüche 14 bis 19, dadurch gekennzeichnet, daß das integriert optische Bauteil ein integriert optisches Deckelbauteil (49) umfaßt, welches mittels eines Polymerklebstoffs (44) auf einem Substrat (38) befestigt ist, welches einen Wellenleitergraben (41) aufweist, wobei der Polymerklebstoff (44) den Wellenleitergraben (41) ausfüllt.

## Claims

1. Method of manufacturing an integrated optical cover component, characterized in that a trough-shaped container (20), which is open at one side, is mounted with its opening directed downwards onto a moulding die (10) having at least one raised portion (19, 48), and that introduced into the interior of the trough-shaped container (20) is an optically transparent, liquid reaction casting compound (27), which spreads over the surface Of the moulding die (10) lying inside the trough-shaped container (20), and that the reaction casting compound (27) is then heated to reaction temperature so that the reaction casting compound (27) at least partially sets, and that the integrated optical cover component (49) comprising the trough-shaped container (20) and the at least partially set reaction casting compound (27) is lifted off the moulding die (10), wherein the at least one raised portion (19, 48) leaves behind at least one indentation (42, 43) in the at least partially set reaction casting compound (27).

2. Method according to claim 1, characterized in that the liquid reaction casting compound (27) is introduced into the trough-shaped container (20) prior to mounting of the trough-shaped container (20) onto the moulding die (10) and is cooled such as to produce an increase of the viscosity of the reaction casting compound (27), and that the trough-shaped container (20) with the viscous reaction casting compound (27) is then turned over and mounted onto the moulding die (10) and subsequently reheated, thereby returning the reaction casting compound (27) to the liquid state.

3. Method according to claim 1, characterized in that prior to mounting of the trough-shaped container (20) onto the moulding die (10) there is introduced into the base of the trough-shaped container (20) an opening (21), through which the liquid reaction casting compound (27) is introduced into the trough-shaped container (20) after mounting.

4. Method according to one of claims 1 to 3, characterized in that prior to mounting of the trough-shaped container (20) onto the moulding die (10) at least one electro-optical component (26) is mounted onto the moulding die (10) at a point which is subsequently covered by the trough-shaped container (20).

5. Method according to claim 4, characterized in that the electro-optical component (26) during the reaction process is pressed against the surface of the moulding die (10).

6. Method according to claim 5, characterized in that the electro-optical component (26) is pressed against the surface of the moulding die (10) by means of a magnetic force.

7. Method according to one of claims 1 to 6, characterized in that the moulding die (10) is heated to initiate the reaction process.

8. Method according to claim 7, characterized in that the moulding die (10) is heated over a large area from its underside.

9. Method according to one of claims 1 to 8, characterized in that a ferromagnetic material is selected for the moulding die (10) and that prior to mounting of the trough-shaped container (20) onto the moulding die (10) the moulding die (10) is laid onto a carrier plate (12) and held there by means of a magnetic field.

10. Method according to one of claims 1 to 9, characterized in that disposed in the trough-shaped container (20) is an auxiliary structure (32), which reduces the risk of the set reaction casting compound (27) slipping towards the base of the trough-shaped container (20).

11. Method according to one of claims 1 to 10, characterized in that the reaction casting compound (27) is set in at least two temperature stages, wherein in the first, lower temperature stage a setting of the portion of the reaction casting compound (27) in the immediate vicinity of the surface of the moulding die (10) is effected and only in the second, higher temperature stage does a setting encompassing the entire reaction casting compound (27) begin.

12. Method according to one of claims 1 to 11, characterized in that a filling compound (51) is introduced into a cavity remaining between the set reaction casting compound (27) and the base of the trough-shaped container (20).

13. Method according to one of claims 1 to 12, characterized in that disposed in the trough-shaped container (20) is at least one support element (50), which extends from a side wall or the base of the trough-shaped container (20) into the interior of the latter and during setting of the reaction casting compound (27) bonds with the latter.

14. Integrated optical cover component, characterized in that the integrated optical cover component (49) comprises a trough-shaped container (20), which is closed at one side by a reaction casting compound (27) set by reaction, and that the set reaction casting compound (27) at the side remote from the interior of the trough-shaped container (20) has at least one indentation (42, 43).

15. Integrated optical cover component according to claim 14, characterized in that at least one electro-optical component (26) is at least partially embedded in the set reaction casting compound (27).

16. Integrated optical cover component according to claim 15, characterized in that the electro-optical component (26) comprises at least one permanent magnet (52) or ferromagnetic disk (25).

17. Integrated optical cover component according to one of claims 14 to 16, characterized in that in the interior of the trough-shaped container (20) a filling compound (51) is disposed on the set reaction casting compound (27).

18. Integrated optical cover component according to one of claims 14 to 17, characterized in that the trough-shaped container (20) has at least one auxiliary structure (32), which reduces the risk of the set reaction casting compound (27) slipping towards the base of the trough-shaped container (20).

19. Integrated optical cover component according to one of claims 14 to 18, characterized in that the trough-shaped container (20) has at least one support element (50), which extends from a side wall or the base of the trough-shaped container (20) into the interior of the latter and is at least partially bonded with the reaction casting compound (27).

20. Method of manufacturing an integrated optical component having an integrated optical cover component according to one of claims 14 to 19, characterized in that the integrated optical cover component (49) is mounted onto a base part (39), wherein at least one of the at least one indentation (42, 43) serves as a waveguide trench, and that introduced between the base part (39) and the set reaction casting compound (27) is a polymer adhesive (44) which, during mounting, fills the waveguide trench, with the result that the integrated optical component comprising the integrated optical cover component (49), the base part (39) and the polymer adhesive (44) is produced.

21. Method of manufacturing an integrated optical component having an integrated optical cover component according to one of claims 14 to 19, characterized in that the integrated optical cover component (49) is mounted onto a substrate (38), which has a waveguide trench (41), and that introduced between the substrate (38) and the set reaction casting compound (27) is a polymer adhesive (44) which, during mounting, fills the waveguide trench (41), with the result that the integrated optical component comprising the integrated optical cover component (49), the substrate (38) and the polymer adhesive (44) is produced.

22. Integrated optical component having an integrated optical cover component according to one of claims 14 to 19, characterized in that the integrated optical component comprises an integrated optical cover component (49), which is fastened by means of a polymer adhesive (44) on a base part (39), wherein polymer adhesive (44) fills the indentation (42, 43).

23. Integrated optical component having an integrated optical cover component according to one of claims 14 to 19, characterized in that the integrated optical component comprises an integrated optical cover component (49), which is fastened by means of a polymer adhesive (44) on a substrate (38), which has a waveguide trench (41), wherein the polymer adhesive (44) fills the waveguide trench (41).

## Revendications

1. Procédé pour fabriquer un composant formant couvercle d'optique intégré, caractérisé en ce qu'on place un récipient en forme d'auge (20) ouvert d'un côté, avec son ouverture tournée vers le bas, sur un poinçon de moulage (10), qui comporte au moins un bossage (19, 48) et en ce qu'on introduit dans l'espace intérieur du récipient en forme d'auge (20) une masse de coulée réactionnelle (27) liquide transparente du point de vue optique, qui se répartit sur la surface du poinçon de moulage (10), située à l'intérieur du récipient en forme d'auge (20), et en ce qu'on amène alors la masse de coulée réactionnelle (27) à réagir, sous l'effet d'un chauffage, ce qui a pour effet que la masse de coulée réactionnelle (27) se solidifie au moins partiellement et en ce qu'on retire du poinçon de moulage (10) le composant formant couvercle (49) en optique intégré, constitué par le récipient en forme d'auge (20) et la masse de coulée réactionnelle (27) au moins partiellement solidifiée, le au moins un brossage (19, 48) laissant subsister au moins une cavité (42, 43), dans la masse de coulée réactionnelle (27) au moins partiellement solidifiée.

2. Procédé selon la revendication 1, caractérisé en ce qu'avant la mise en place du récipient en forme d'auge (20) sur le poinçon de moulage (10), on introduit la masse de coulée réactionnelle liquide (27) dans le récipient en forme d'auge (20) et on la refroidit de manière à obtenir un accroissement de la viscosité de la masse de coulée réactionnelle (27), on retourne ensuite le récipient en forme d'auge (20) contenant la masse de coulée réactionnelle visqueuse (27), on le place sur le poinçon de moulage (10) et on le chauffe ensuite à nouveau de sorte que la masse de coulée réactionnelle (27) passe à nouveau à l'état liquide.

3. Procédé selon la revendication 1, caractérisé en ce qu'avant la mise en place du récipient en forme d'auge (20) sur le poinçon de moulage (10) on aménage, dans le fond du récipient en forme d'auge (20), une évidement (21) par lequel on introduit, après la mise en place du récipient, la masse de coulée réactionnelle liquide (27) dans le récipient en forme d'auge (20).

4. Procédé selon l'une des revendications 1 à 3, caractérisé en ce qu'avant la mise en place du récipient en forme d'auge (20) sur le poinçon de moulage (10), on place au moins un composant électro-optique (26) sur le poinçon de moulage (10) en un emplacement qui est recouvert ensuite par le récipient en forme d'auge (20).

5. Procédé selon la revendication 4, caractérisé en ce que pendant le processus réactionnel, le composant électro-optique (26) est repoussé contre la surface du poinçon de moulage (10).

6. Procédé selon la revendication 5, caractérisé en ce que le composant électro-optique (26) est repoussé par une force magnétique contre la surface du poinçon de moulage (10).

7. Procédé selon l'une des revendications 1 à 6, caractérisé en ce qu'on chauffe le poinçon de moulage (10) pour déclencher le processus réactionnel.

8. Procédé selon la revendication 7, caractérisé en ce qu'on chauffe le poinçon de moulage (10) sur une surface étendue à partir de sa face inférieure.

9. Procédé selon l'une des revendications 1 à 8, caractérisé en ce que pour le poinçon de moulage (10) on choisit un matériau ferromagnétique et qu'avant la mise en place du récipient en forme d'auge (20) sur le poinçon de moulage (10), on applique le poinçon de moulage (10) sur une plaque de support (12), où il est retenu à l'aide d'un champ magnétique.

10. Procédé selon l'une des revendications 1 à 9, caractérisé en ce qu'on dispose dans le récipient en forme d'auge (20) une structure auxiliaire (32), qui réduit le risque d'un glissement de la masse de coulée réactionnelle solidifiée (27) en direction du fond du récipient en forme d'auge (20).

11. Procédé selon l'une des revendications 1 à 10, caractérisé en ce qu'on solidifie la masse de coulée réactionnelle (27) en au moins deux étapes de température, auquel cas dans la première étape de température plus faible, il se produit une solidification de la partie de la masse de coulée réactionnelle (27) à proximité directe de la surface du poinçon de moulage (10) et il se produit une solidification concernant toute la masse de coulée réactionnelle (27) uniquement lors de la seconde étape de température plus élevée.

12. Procédé selon l'une des revendications 1 à 11, caractérisé en ce qu'on introduit une masse de remplissage (51) dans une cavité qui subsiste entre la masse de coulée réactionnelle solidifiée (27) et le fond du récipient en forme d'auge (20).

13. Procédé selon l'une des revendications 1 à 12, caractérisé en ce qu'on dispose dans le récipient en forme d'auge (20) au moins un élément de support (50), qui s'étend dans l'espace intérieur du récipient en forme d'auge (20) à partir d'une paroi latérale ou du fond de ce récipient et qui se fixe à la masse de coulée réactionnelle (27) lors de la solidification de cette dernière.

14. Composant formant couvercle d'optique intégré, caractérisé en ce que le composant formant couvercle (49) d'optique intégrée comprend un récipient en forme d'auge (20) fermé d'un côté par une masse de coulée réactionnelle (27) solidifiée par réaction, et que la masse de coulée réactionnelle solidifiée (27) comporte au moins une cavité (42, 43) sur le côté situé à l'opposé de l'espace intérieur du récipient en forme d'auge (20).

15. Composant formant couvercle d'optique intégré selon la revendication 14, caractérisé en ce qu'au moins un composant électro-optique (26) est inséré au moins partiellement dans la masse de coulée réactionnelle (27) solidifiée.

16. Composant formant couvercle d'optique intégré selon la revendication 15, caractérisé en ce que le composant électro-optique (26) comporte au moins un aimant permanent (52) ou un disque ferromagnétique (25).

17. Composant formant couvercle d'optique intégré selon l'une des revendications 14 à 16, caractérisé en ce qu'une masse de remplissage (51) est disposée sur la masse de coulée réactionnelle solidifiée (27), dans l'espace intérieur du récipient en forme d'auge (20).

18. Composant formant couvercle d'optique intégré selon l'une des revendications 14 à 17, caractérisé en ce que le récipient en forme d'auge (20) possède au moins une structure auxiliaire (32), qui réduit le risque d'un décalage de la masse de coulée réactionnelle solidifiée (27) en direction du fond du récipient en forme d'auge (20).

19. Composant formant couvercle d'optique intégré selon l'une des revendications 14 à 18, caractérisé en ce que le récipient en forme d'auge (20) possède au moins un élément de support (50), qui s'étend dans l'espace intérieur du récipient en forme d'auge (20) à partir d'une paroi latérale ou du fond de ce récipient et est relié au moins partiellement à la masse de coulée réactionnelle (27).

20. Procédé pour fabriquer un composant d'optique intégré comportant un composant formant couvercle d'optique intégré selon l'une des revendications 14 à 19, caractérisé en ce qu'on place le composant formant couvercle (49) d'optique intégré sur une partie de fond (39), selon lequel au moins une cavité (42, 43) est utilisée comme sillon pour guide d'ondes et qu'on introduit entre la partie de fond (39) et la masse réactionnelle de coulée solidifiée (27), un adhésif polymère (44) qui, lors de la mise en place, remplit le sillon pour guide d'ondes, ce qui a pour effet que l'on obtient le composant d'optique intégré, qui comprend le composant formant couvercle (49) d'optique intégré, la partie de fond (39) et l'adhésif polymère (44).

21. Procédé pour fabriquer un composant d'optique intégré comportant un composant formant couvercle d'optique intégré selon l'une des revendications 14 à 19, caractérisé en ce qu'on place le composant formant couvercle (49) d'optique intégré sur un substrat (38), qui possède un sillon (41) pour guide d'ondes et qu'on introduit entre le substrat (38) et la masse réactionnelle de coulée solidifiée (27) un adhésif polymère (44) qui lors de la mise en place remplit le sillon (41) pour guide d'ondes, ce qui permet d'obtenir le composant d'optique intégré, qui comprend le composant formant couvercle (49) d'optique intégré, la partie de fond (39) et l'adhésif polymère (44).

22. Composant d'optique intégré comportant un composant formant couvercle d'optique intégré selon l'une des revendications 14 à 19, caractérisé en ce que le composant d'optique intégré comprend un composant formant couvercle (49) d'optique intégré, qui est fixé à l'aide d'un adhésif polymère (44) sur une partie de fond (39), l'adhésif polymère (44) remplissant la cavité (42, 43).

23. Composant d'optique intégré comportant un composant formant couvercle d'optique intégré selon l'une des revendications 14 à 19, caractérisé en ce que le composant d'optique intégré comprend un composant formant couvercle (49) d'optique intégré, qui est fixé au moyen d'un adhésif polymère (44) sur un substrat (38) qui comporte un sillon (41) pour guide d'ondes, l'adhésif polymère (44) remplissant le sillon (41) pour guide d'ondes.
